Europäisches Patentamt

European Patent Office

Office européen des brevets

(19)

(11) EP 0 991 937 B1

(12) FASCICULE DE BREVET EUROPEEN

(45) Date de publication et mention
de la délivrance du brevet:
**22.08.2001 Bulletin 2001/34**

(21) Numéro de dépôt: **98932253.2**

(22) Date de dépôt: **26.06.1998**

(51) Int Cl.⁷: **G01N 23/06**

(86) Numéro de dépôt international:
**PCT/FR98/01368**

(87) Numéro de publication internationale:
**WO 99/00662 (07.01.1999 Gazette 1999/01)**

(54) **PROCEDE DE MESURE DU GRAMMAGE DES COMPOSANTS D'UN MATERIAU COMPOSE**

VERFAHREN ZUR KOMPONENTENOBERFLÄCHENDICHTEERMITTLUNG EINES
KOMPOSITMATERIALS

METHOD FOR MEASURING THE BASIC WEIGHT OF CONSTITUENTS IN A COMPOUND
MATERIAL

(84) Etats contractants désignés:
**DE FR GB**

(30) Priorité: **27.06.1997 FR 9708138**

(43) Date de publication de la demande:
**12.04.2000 Bulletin 2000/15**

(73) Titulaire: **COMMISSARIAT A L'ENERGIE
ATOMIQUE
75015 Paris Cédex 15 (FR)**

(72) Inventeur: **CHAMBELLAN, Dominique
F-78000 Versailles (FR)**

(74) Mandataire: **Poulin, Gérard et al
Société BREVATOME
3, rue du Docteur Lancereaux
75008 Paris (FR)**

(56) Documents cités:
• **J.A. SORENSON: "Absorption-Edge
transmission technique using Ce-139
measurement of stable Iodine concentration."
JOURNAL OF NUCLEAR MEDICINE., vol. 20, no.
12, décembre 1979, pages 1286-1293,
XP002057497 NEW YORK US**
• **R. CESAREO ET AL.: "Differential attenuation of
x-rays: analytical applications." NUCLEAR
INSTRUMENTS & METHODS IN PHYSICS
RESEARCH., vol. a239, no. 2, septembre 1985,
pages 367-370, XP002057498 AMSTERDAM NL**

## Description

### DOMAINE DE L'INVENTION

L'invention concerne un procédé pour mesurer simultanément le grammage des composants d'un matériau constitué de plusieurs composants, mélangés ou superposés, et de compositions atomiques différentes.

Ce procédé trouve des applications dans le domaine médical, notamment pour la mesure de la teneur en calcium des os, dans le domaine chimique pour mesurer la teneur en charge de polymères et d'élastomères ou encore dans le domaine de la métallurgie pour déterminer le titre d'un métal dans un alliage. Il trouve également des applications dans l'industrie pétrolière pour déterminer la composition de mélanges eau-huile et dans la plupart des domaines nécessitant une détermination de la teneur d'un composant dans un matériau composé.

### ETAT DE LA TECHNIQUE

Pour mesurer le grammage des composants d'un matériau, il est connu d'effectuer une analyse chimique d'un échantillon du matériau. Une telle analyse présente, néanmoins, l'inconvénient d'être longue, coûteuse et destructrice puisque, après l'analyse, l'échantillon de matériau ne peut plus être utilisé.

Un autre procédé pour mesurer les grammages dans un matériau est le procédé biphotonique à énergies suffisamment distinctes. Ce procédé, utilisé notamment en ostéodensimétrie, repose sur l'utilisation de deux modes d'interaction rayonnement/matière :

- le mode d'interaction relatif à l'effet photoélectrique, qui se caractérise par une variation forte du coefficient d'absorption lorsque l'énergie varie : plus l'énergie est faible, plus le coefficient d'absorption est élevé ; cette valeur élevée du coefficient d'absorption aux faibles énergies, est d'autant plus importante que le composant considéré a un numéro atomique élevé ;
  et :
- le mode d'interaction relatif à l'effet Compton qui se caractérise par une variation faible du coefficient d'absorption lorsque l'énergie varie ; ces faibles écarts du coefficient d'absorption sont encore plus faibles lorsqu'il s'agit de corps de faible numéro atomique : les courbes d'absorption sont alors très proches les unes des autres, voire presque confondues.

Ce procédé biphotonique de mesure de grammages utilise donc ces deux modes d'interaction, en mesurant le coefficient d'atténuation du matériau composé à deux énergies E1, E2 suffisamment distinctes l'une de l'autre et choisies de façon à ce que l'un des composants ait pour effet prépondérant l'effet Compton et l'autre composant ait pour effet prépondérant l'effet photoélectrique et de façon à ce que, pour l'énergie E2, les deux composants aient pour effet prépondérant l'effet Compton.

Le seuil au-dessous duquel l'absorption est due essentiellement à l'effet photoélectrique varie beaucoup selon la masse atomique. Néanmoins, pour de nombreux corps on peut le situer vers 30 KeV.

Quant à l'énergie E2, elle est choisie relativement élevée de façon à ce que le rapport des atténuations mesurées pour l'énergie E2 soit suffisamment différent du rapport des atténuations mesurées pour l'énergie E1. Etant donné la valeur élevée choisie pour l'énergie E2, on considère que l'absorption à cette énergie E2 est essentiellement due à l'effet Compton pour les deux composants.

Dans le cas d'un matériau composé comportant un premier composant appelé « e » et un second composant appelé « f », le choix des énergies E1 et E2, d'après ce procédé biphotonique, est le suivant : si $\mu_{e1}$ et $\mu_{f1}$ sont les coefficients d'absorption des matériaux e et f pour l'énergie E1, et $\mu_{e2}$ et $\mu_{f2}$ les coefficients d'absorption des matériaux e et f pour l'énergie E2, l'énergie E1 est choisie, suffisamment faible pour que $\mu_{e1}$ et $\mu_{f1}$ soient les plus différents possible (c'est à dire que leur rapport soit le plus possible différent possible de 1), et l'énergie E2 est choisie suffisamment élevée pour que $\mu_{e2}$ et $\mu_{f2}$ soient les plus proches possible (c'est à dire que leur rapport soit le plus proche possible de 1 et, si possible, égal à 1).

Les coefficients d'absorption $\mu_{e1}$ et $\mu_{f1}$ à l'énergie E1, et $\mu_{e2}$ et $\mu_{f2}$ à l'énergie E2, mesurés pour les composants « e » et « f », ainsi que les coefficients d'atténuation globale du matériau composé, permettent d'écrire un système de deux équations à deux inconnues, où les inconnues sont les masses surfaciques des composants dans le matériau. La résolution de ce système permet de déterminer les masses surfaciques de chacun des composants dans le matériau composé.

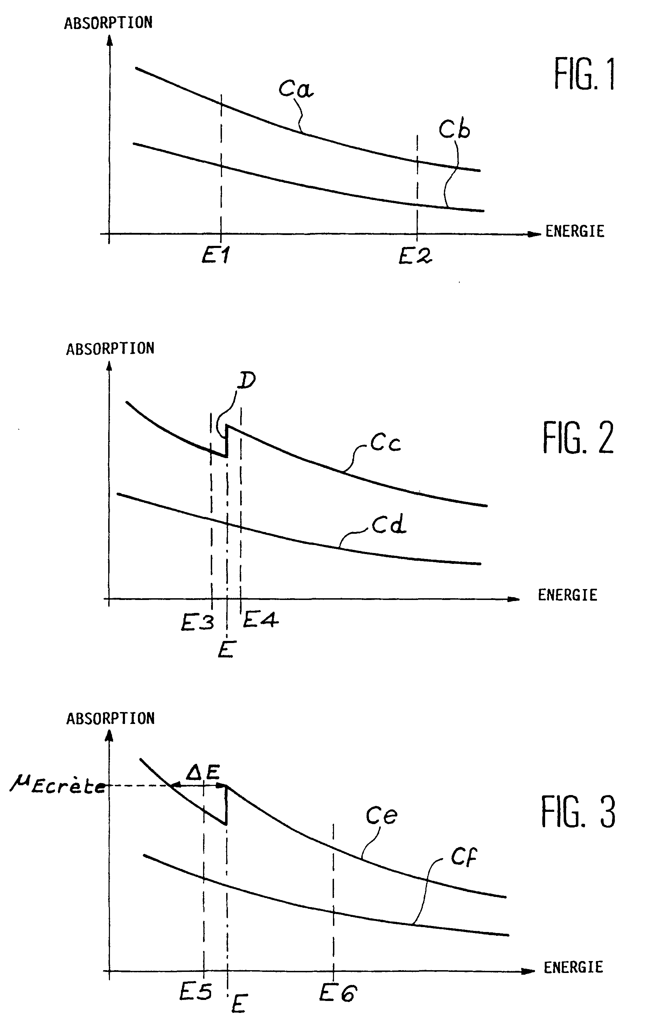

Sur la figure 1, on a représenté les courbes d'absorption obtenues par ce procédé pour les deux composants constituant le matériau composé à étudier. La courbe Ca représente l'absorption du premier composant du matériau composé et la courbe Cb représente l'absorption du second composant du matériau composé.

Ces courbes étant tracées pour des valeurs d'énergie relativement élevées (supérieures à 30 keV), elles sont continues, c'est-à-dire sans aucune discontinuité. On a représenté, en outre, sur la figure 1 les énergies E1 et E2 suffisamment distinctes l'une de l'autre.

Par exemple, dans une application où l'on utilise une source unique de 153Gd pour émettre des faisceaux d'énergie, les énergies E1 et E2 sont respectivement égales à 44 keV et 100 keV.

L'énergie E2 étant généralement choisie supérieure à 50 keV, l'absorption du faisceau d'énergie E2 par un composant en faible proportion (par exemple l'un des composants d'un matériau formé de plusieurs couches superposées) est quasiment négligeable, ce qui fournit des mesures très imprécises et donc sans intérêt. L'inconvénient majeur de ce procédé est donc de ne pouvoir être utilisé que pour des matériaux comportant des composants en proposition suffisante.

Un perfectionnement connu de ce procédé biphotonique pour mesurer la teneur en composants d'un matériau est le procédé dit du « K-edge ». Un tel procédé est décrit par R. CESAREO et Al., dans « Differential attenuation of x-rays : analytical applications », Nuclear Instruments & Methods in Physics Research, vol. a239, n° 2, Septembre 1985, pages 367-370, XP002057498, Amsterdam NL. Ce procédé utilise des détecteurs à haute résolution qui ont l'inconvénient d'être refroidis à l'azote liquide et d'être coûteux.

Le document « Absorption-Edge transmission technique using Ce-139 measurement of stable Iodine concentration » de S. A. SORENSON, Journal of Nuclear Medicine, vol. 20, n° 12, Décembre 1979, pages 1 286 - 1 293, XP002057497, New York US, décrit une application typique de la méthode du K-edge dans laquelle on utilise des détecteurs bon marché et des mesures séquentielles (avec et sans filtre). Les mesures effectuées selon cette méthode présentent l'inconvénient d'être réalisées en deux temps. Or, il est quasi impossible de retrouver, pour la seconde mesure, la parcelle exacte du produit qui a fait l'objet de la première mesure.

D'une façon générale, le procédé du K-edge utilise des rayonnements de faibles énergies, c'est-à-dire des énergies de quelques keV.

A de telles énergies, deux remarques s'imposent :

- l'effet prépondérant est l'effet photoélectrique pour l'un des composants du matériau ;
- la courbe d'absorption de ce même matériau comporte une discontinuité.

Cette discontinuité peut être la discontinuité k, qui correspond à la variation du coefficient d'absorption lorsque les photons incidents ont une énergie E un peu inférieure ou un peu supérieure à l'énergie qui leur permet d'atteindre la couche atomique k du matériau considéré. Il existe de manière analogue une discontinuité l, correspondant à la couche atomique l, une discontinuité m,correspondant à la couche atomique m, et ainsi de suite. C'est la discontinuité k qui est mise à profit dans ce procédé du k-edge.

De façon plus précise, ce procédé consiste à choisir deux énergies E3 et E4 situées de part et d'autre de la discontinuité. Elles sont choisies le plus proche possible l'une de l'autre, en pratique avec un écart de l'ordre du pour-cent, mais peut s'en écarter pour certains matériaux (notamment de faible masse atomique). Du fait de cette discontinuité, les coefficients d'absorption $\mu_{c3}$ et $\mu_{c4}$ du composant « c », dont la courbe représentative comporte la discontinuité, sont très nettement différents l'un de l'autre bien que les énergies E3 et E4 soient très proches. Au contraire, pour le composant « d » dont la courbe ne présente pas de discontinuité, les coefficients d'absorption $\mu_{d3}$ et $\mu_{d4}$ sont quasiment égaux puisque les énergies sont très proches.

Comme dans le procédé biphotonique décrit précédemment, la mesure de ces absorptions pour chaque composant pris individuellement et la mesure de l'absorption globale mesurée pour chacune des énergies E3 et E4 permet d'écrire un système de deux équations à deux inconnues qui peut être résolu très simplement (par exemple, par soustraction membre à membre) puisque l'un des composants a des coefficients d'absorption identiques pour les deux énergies. On peut ainsi déterminer la masse surfacique de chaque composant indépendamment de l'autre.

Pour illustrer ce procédé, on a représenté sur la figure 2, les courbes d'absorption Cc et Cd de deux composants constituant le matériau composé à étudier. Sur la courbe Cc, on a représenté la discontinuité D correspondant à une énergie caractéristique E. De part et d'autre de cette énergie E sont référencées les énergies E3 et E4. Par exemple, dans le cas de la mesure du grammage d'oxyde de fer dans un polymère, l'énergie caractéristique E vaut environ 7,1 Kev, et les énergies E3 et E4 respectivement 6,9 et 7,3 Kev.

Ce procédé étant mis en oeuvre pour de faibles énergies, il peut donc être utilisé pour des matériaux dont les composants sont de faible épaisseur.

Cependant, la mise en oeuvre de ce procédé pour des matériaux en défilement nécessite d'émettre simultanément les deux faisceaux d'énergie E3 et E4. Or, ces énergies sont très proches l'une de l'autre, ce qui nécessite, pour les détecter, d'utiliser un détecteur présentant une très bonne résolution en énergie. Il faut donc utiliser des détecteurs de type à germanium refroidi à l'azote liquide, dont le coût est fort élevé et qui rend le procédé lourd à mettre en oeuvre.

En outre, ce procédé ne peut être mis en oeuvre que pour des matériaux statiques, c'est à dire restant immobile devant le détecteur ; dans ce cas, les faisceaux d'énergie peuvent être émis successivement et captés par un détecteur de résolution moyenne. Toutefois, pour que la lecture sur le détecteur puisse être réalisable, il faut utiliser une source particulière, de coût très élevé et, généralement, de courte durée de vie.

EXPOSE DE L'INVENTION

L'invention a justement pour avantage de remédier aux inconvénients des procédés décrits précédemment. A cette fin, elle propose un procédé de détermination du grammage des composants d'un matériau qui peut être mis en oeuvre pour des composants de faible épaisseur et qui ne nécessite que l'emploi de détecteurs à faible résolution, donc peu coûteux.

Le matériau à étudier peut être composé d'un substrat organique (plastique, bois, etc.) ou d'un substrat minéral (métal, verre, etc.) et d'un additif à mesurer tel qu'un dépôt, une charge, une enduction ou un constituant mélangé.

De façon plus précise, l'invention concerne un procédé de mesure du grammage de chaque composant d'un matériau composé comportant au moins un premier composant « e » dont l'absorption d'énergie peut être représentée par une courbe comportant une discontinuité (D), pour une valeur d'énergie de discontinuité (E), et un second composant « f », de constitution chimique différente, dont l'absorption d'énergie peut être représentée par une courbe sans discontinuité pour les valeurs d'énergie utilisées dans la mesure. Ce procédé consiste :

- à émettre, en direction du matériau composé, deux faisceaux d'énergies différentes E5 et E6, ou un seul faisceau comportant ces deux énergies, l'énergie E5 étant inférieure à la valeur d'énergie de discontinuité E, et l'énergie E6 étant supérieure à cette valeur E, E5 et E6 étant choisis de manière à respecter les deux conditions suivantes :

  - donner à E5 une valeur suffisamment élevée pour que les photons de cette énergie traversent le matériau composé à mesurer dans une proportion suffisamment élevée ;
  - donner à E6 une valeur suffisamment proche de E5 pour que ces deux énergies rentrent dans le spectre d'un détecteur à large bande et suffisamment éloignée de E5 pour que E6-E5 soit du même ordre de grandeur que $\Delta E$, ou légèrement supérieur, $\Delta E$ étant défini graphiquement sur

- à mesurer, pour chaque faisceau d'énergie émis, une atténuation globale du matériau composé ; et
- à déterminer le grammage des composants du matériau à partir d'un système d'équations reliant, pour chaque valeur d'énergie, l'atténuation globale mesurée, le coefficient d'absorption des composants et le grammage de chacun des composants.

Il est à noter que les énergies E5 et E6 diffèrent l'une de l'autre d'une valeur E6 - E5, supérieure d'au moins un ordre de grandeur à la valeur E4 - E3 utilisée pour le k-edge (généralement 10 à 20 fois), et que la valeur E6 - E5 est d'un ordre de grandeur identique ou sensiblement supérieur à la valeur $\Delta E$ définie ci-dessous.

Cet écart $\Delta E$ qui donne l'ordre de grandeur pour déterminer E6 - E5 est défini graphiquement sur la courbe d'absorption présentant la discontinuité. C'est l'écart entre :

- d'une part l'énergie correspondant à la valeur maximale $\mu_{Ecrète}$ du coefficient d'absorption à la discontinuité ; et

la courbe d'absorption présentant la discontinuité, comme l'écart entre d'une part l'énergie correspondant à la valeur maximale $\mu_{Ecrète}$ du coefficient d'absorption à la discontinuité, et d'autre part l'énergie, inférieure à cette énergie de discontinuité, où on retrouve une valeur du coefficient d'atténuation égale à $\mu_{Ecrète}$,

- à mesurer, pour chaque faisceau d'énergie émis, une atténuation globale du matériau composé ; et
- à déterminer le grammage des composants du matériau à partir d'un système d'équations reliant, pour chaque valeur d'énergie, l'atténuation globale mesurée, le coefficient d'absorption des composants et le grammage de chacun des composants.

Il va de soi que cette valeur donne l'ordre de grandeur de E6 - E5, mais que la valeur définitive sera optimisée en tenant compte des paramètres habituels de la technique, comme par exemple la dynamique de l'électronique dont dispose l'homme du métier, ou certaines valeurs d'énergies particulièrement intéressantes pour une application, ou encore pour obtenir, à l'énergie E6, la même valeur d'atténuation pour les deux matériaux.

Avantageusement, les coefficients d'atténuation globale sont mesurés simultanément au moyen de détecteurs à faible résolution.

Selon un mode de réalisation de l'invention, les faisceaux d'énergies sont émis simultanément par deux sources radioactives émettant à des énergies suffisamment différentes.

Selon un autre mode de réalisation de l'invention, les faisceaux d'énergies sont émis par un même générateur de rayons X.

Selon encore un autre mode de réalisation, les faisceaux d'énergies sont émis simultanément par une même source radioactive.

Dans certaines applications de l'invention, le matériau composé est animé d'un mouvement continu et passe à travers les deux faisceaux d'énergie, ou, si un seul faisceau comporte les deux énergies, à travers ce faisceau.

BREVE DESCRIPTION DES DESSINS

- la figure 1, déjà décrite, représente les courbes d'absorption de deux composants d'un matériau, utilisées dans le procédé biphotonique à énergies distinctes ;
- la figure 2, déjà décrite, représente les courbes d'absorption de composants d'un matériau, utilisées dans le procédé du "K-edge" ; et
- la figure 3 représente les courbes d'absorption de composants d'un matériau, utilisées dans le procédé de l'invention.

EXPOSE DETAILLE DE MODES DE REALISATION

Le procédé selon l'invention permet de déterminer le grammage des composants d'un matériau composé. Ce matériau composé peut comporter deux ou plusieurs composants de géométries variables, dont on cherche à déterminer la teneur.

Le procédé de l'invention consiste tout d'abord à construire les courbes d'absorption des composants du matériau à étudier. Toutefois, s'il s'agit de matériaux courants dont les courbes d'absorption sont déjà connues, il est bien sûr inutile de les retracer, et on peut utiliser directement les valeurs lues sur ces courbes connues.

Sur la figure 3, on a représenté un exemple de deux courbes d'absorption Ce et Cf représentant, respectivement, les coefficients d'absorption d'un premier matériau e et d'un second matériau f en fonction de l'énergie.

Ce procédé de l'invention est mis en oeuvre pour des valeurs d'énergie telles que l'un des composants comporte une discontinuité, à une énergie de discontinuité E. Sur cette figure 3, la discontinuité est référencée D.

Ce procédé, qui met à profit l'existence de cette discontinuité D, consiste à émettre deux faisceaux de rayonnement γ ou X ayant des énergies différentes. Ces énergies sont choisies de façon à être situées de part et d'autre de l'énergie caractéristique E ; elles sont en outre suffisamment différentes l'une de l'autre. la figure 3, on a référencé par E5 et E6 ces deux énergies tout à fait distinctes et situées de part et d'autre de l'énergie caractéristique E. Le choix de ces énergies E5 et E6 relativement éloignées l'une de l'autre implique que les coefficients d'absorption mesurés, pour chacune de ces énergies E5 et E6, sur chacune des courbes Ce et Cf, diffèrent largement les uns des autres. Ainsi, même les coefficients d'absorption lus sur la courbe continue Cf pour l'énergie E5 et E6 sont distincts l'un de l'autre. On obtient de cette façon quatre coefficients d'absorption différents.

Les énergies E5 et E6 diffèrent l'une de l'autre d'une valeur E6 - E5 dont l'ordre de grandeur est celui de l'écart ΔE entre : l'énergie correspondant à la valeur maximale ($\mu_{E\text{crète}}$) du coefficient d'absorption à la discontinuité (D) et une énergie, inférieure à l'énergie de discontinuité (E), pour laquelle la valeur du coefficient d'atténuation, sur la courbe, est égale à $\mu_{E\text{crète}}$.

Le procédé de l'invention consiste ensuite à mesurer l'atténuation globale de chacun des deux faisceaux d'énergie E5 et E6 par l'ensemble des composants c'est-à-dire par le matériau composé lui-même. On obtient ainsi deux coefficients d'atténuation. En conséquence, il est possible d'écrire, avec les quatre coefficients d'absorption des composants et les deux coefficients d'atténuation globale, un système de deux équations linéaires à deux inconnues, dont les inconnues sont les quantités de chacun des composants dans le matériau composé.

Ce système d'équation se traduit mathématiquement, par les expressions ci-dessous :

$$\begin{cases} N_5 = N_{05} \, e^{-\mu_{e5}.Xe} . e^{-\mu_{f5}.Xf} \\ N_6 = N_{06} \, e^{-\mu_{e6}.Xe} . e^{-\mu_{f6}.Xf} \end{cases}$$

Ces inconnues étant des inconnues logarithmiques, ces équations peuvent se résoudre en transformant les équations ci-dessus de la façon suivante :

$$\begin{cases} Log(N_5 / N_{05}) = -\mu_{e5}.Xe - \mu_{f5}.Xf \\ Log(N_6 / N_{06}) = -\mu_{e6}.Xe - \mu_{f6}.Xf \end{cases}$$

où :

- $N_5/N_{05}$ et $N_6/N_{06}$ représentent, respectivement, l'atténuation globale du matériau par chacune des énergies respectives E5 et E6. De façon plus précise, $N_5$ et $N_6$ représentent le nombre de coups mesurés par le détecteur pour les énergies E5 et E6, pendant le temps de mesure choisi, en présence du matériau composé et $N_{05}$ et $N_{06}$ représentent le nombre de coups mesurés par le détecteur pour les énergies E5 et E6 pendant le même temps de mesure mais hors présence des matériaux absorbants. Le rapport $N_5/N_{05}$ ou $N_6/N_{06}$ représente donc l'atténuation globale du matériau composé.
- $\mu$ représente les coefficients d'absorption, $\mu_{e5}$ étant le coefficient d'absorption du composant e pour une énergie E5, $\mu_{e6}$ le coefficient d'absorption du composant e pour l'énergie E6, $\mu_{f5}$ le coefficient d'absorption du composant f pour l'énergie E5 et $\mu_{f6}$ le coefficient d'absorption du coefficient f pour l'énergie E6.
- $X_e$ et $X_f$ représentent, respectivement, les inconnues du système c'est-à-dire les quantités de composants e et f dans le matériau composé.

Pour résoudre ce système d'équation linéaire à deux inconnues, il y a toutefois une condition à respecter de façon à ce que les coefficients des inconnues $X_e$ et $X_f$ ne soient pas proportionnels deux à deux. Cette condition suppose que les deux composants du matériau à étudier présentent des coefficients d'absorption moyens suffisamment différents. C'est pourquoi, les énergies E5 et E6 sont choisies suffisamment distinctes l'une de l'autre de façon à ce que les coefficients d'absorption qui leurs correspondent soient suffisamment différents.

Ces énergies E5 et E6 sont de plus choisies suffisamment distinctes l'une de l'autre de façon à ce que la discrimination entre les deux énergies puissent être détectée par un simple détecteur à faible résolution. Aussi, les détecteurs à faible résolution étant d'un coût très modéré, la mise en oeuvre de ce procédé est donc relativement peu coûteuse par rapport aux procédés de l'art antérieur.

Avec ce procédé de l'invention, les faisceaux d'énergies peuvent être émis successivement ou simultanément. L'émission des faisceaux d'énergies peut se faire :

- soit en combinant deux sources radioactives judicieusement choisies pour leurs énergies d'émission suffisamment distinctes ; on peut utiliser par exemple des sources $^{55}$Fe, $^{238}$Pu, $^{109}$Cd ou encore $^{210}$Pb ;
- soit au moyen d'une source unique qui émet à deux énergies différentes adaptées au grammage et au numéro atomique des composants à mesurer ; selon un mode de réalisation de l'invention, les faisceaux d'énergie sont émis simulanément par la même source radioactive de sorte que ces faisceaux sont confondus ;
- soit en utilisant un générateur de rayons X qui émet des faisceaux de rayonnements X. Un tel générateur a pour avantage de permettre de mesurer des matériaux en défilement puisqu'il peut s'adapter aux cadences de production choisies, notamment pour les procédés d'induction, de revêtement et de traitement surfacique. Ce générateur de rayons X peut être complété d'un filtre à bande étroite permettant d'obtenir des pics correspondants aux énergies souhaitées ce qui assure une meilleure précision de la mesure. Dans certains cas, les matériaux composés constituent eux-mêmes des auto-filtres.

On comprendra aisément, que la grande variété des sources d'émission qui peuvent être utilisées dans ce procédé sont un atout important puisqu'il est alors possible d'adapter les valeurs d'énergies aux types de mesures à effectuer, et donc aux types de composants compris dans le matériau à étudier.

En outre, qu'ils soient émis successivement ou simultanément, les faisceaux d'énergies E5 et E6 peuvent être tous deux détectés successivement ou simultanément par un seul détecteur à faible résolution. Dans le cas d'émissions successives, on mesure les coefficients d'atténuation, à une première énergie puis à une seconde énergie, sur un détecteur courant. Dans le cas d'émissions simultanées, le détecteur est choisi de façon à permettre des lectures simultanées aux deux énergies considérées.

Ce détecteur peut être, par exemple, un détecteur à scintillateur, ou bien des compteurs proportionnels à gaz, ou encore des diodes non refroidies, qui présentent l'intérêt d'être bon marché et facile d'emploi.

Ce procédé a en outre l'avantage de permettre la détermination du grammage des composants d'un matériau pouvant avoir différentes géométries ; ces composants peuvent être, par exemple, linéaires, ou bien en forme de filament, ou bien surfaciques (en particulier en forme de nappe) ou encore de volumes complexes.

Le procédé a de plus l'avantage de pouvoir être réalisé statiquement, notamment pour un échantillon de matériau de très petit volume, ou de façon continue, notamment pour un produit en défilement, comme cela est très souvent le cas dans l'industrie. Dans ce dernier cas, le matériau à mesurer (par exemple, une bande magnétique), est animé d'un mouvement continu et passe à travers les deux faisceaux d'énergies. L'utilisation de faisceaux d'énergie confondus permet alors de ne pas tenir compte de la vitesse de défilement du matériau lors de la détermination du gommage de chaque composant du matériau.

On peut en outre traiter les résultats des mesures par des moyens informatiques qui permettent, par exemple, de traduire en images la répartition des masses et des compositions.

Le procédé selon l'invention peut être mis en oeuvre, par exemple, pour déterminer le grammage des composants d'une bande magnétique. Dans le cas où cette bande magnétique serait constituée de deux épaisseurs d'un substrat en polyester enduit d'une couche de 16 $\mu$m d'oxyde de fer, les mesures pourraient être réalisées avec des énergies E5 et E6 d'environ 4,8 keV et 9,2 keV, émises par un générateur de rayons X et filtrées au moyen d'une feuille de titane ayant une discontinuité (dans la courbe d'absorption) pour une énergie caractéristique E d'environ 4,96 keV.

Pour un tel exemple, les valeurs des coefficients d'absorption déterminées sur les différentes couches d'absorption pour les énergies E5 et E6 sont de 6 cm$^3$/gr pour le substrat à une énergie haute E6, de 33 cm$^3$/gr pour le substrat à l'énergie basse E5, de 100 cm$^3$/gr pour l'oxyde de fer à l'énergie haute E6 et de 102 cm$^3$/gr pour l'oxyde de fer à l'énergie basse E5.

Pour ces énergies E5 et E6, les coefficients d'atténuation globale pour l'ensemble substrat/oxyde de fer sont, respectivement :

$$\mu_s E_5 = 33 \ cm^2 g^{-1}$$
$$\mu_0 E_5 = 100 \ cm^2 g^{-1}$$
$$\mu_s E_6 = 6 \ cm^2 g^{-1}$$
$$\mu_0 E_6 = 102 \ cm^2 g^{-1}$$

Le rapport entre les coefficients d'absorption du substrat aux énergies basses ($\mu$sE5) et haute ($\mu$sE6) et les coefficients d'absorption de l'oxyde de fer aux énergies haute ($\mu$oE6) et basse ($\mu$oE5), équivaut environ à 5,5, ce qui peut s'écrire ainsi :

$$\frac{\mu s E5}{\mu s E6} \times \frac{\mu o E6}{\mu o E5} \simeq 5,5$$

Ce rapport est donc supérieur à 1, ce qui signifie que les mesures sont suffisamment précises pour déterminer l'épaisseur d'enduction de l'oxyde de fer. Cette épaisseur est de 16,1 µm, ce qui correspond à un grammage de 0,00486 gr/cm$^3$ avec une précision de 1% en 10 secondes.

Une réalisation particulière de ce procédé consiste en un choix particulier des valeurs d'énergie E5 et E6 décrit ci-après, le reste du procédé restant conforme à la description précédente.

On rapelle les notations précédentes où « e » désigne le matériau présentant une discontinuité de la courbe d'absorption, « f » le matériau ne présentant pas de discontinuité de la courbe d'absorption dans la zone de mesure, et µ représente les coefficients d'absorption suivant :

* $\mu_{e5}$ est le coefficient d'absorption du composant « e » pour l'énergie E5,
* $\mu_{e6}$ le coefficient d'absorption du composant « e » pour l'énergie E6,
* $\mu_{f5}$ le coefficient d'absorption du composant « f » pour l'énergie E5,
* $\mu_{f6}$ le coefficient d'absorption du composant « f » pour l'énergie E6.

Cette réalisation particulière consiste à choisir

$$\mu_{e5} = \mu_{e6}$$

avec $\mu_{f5}$ le plus grand possible devant $\mu_{f6}$

alors le rapport :

$$(\mu_{f5} / \mu_{e5}) / (\mu_{f6} / \mu_{e6})$$

devient égal à :

$\mu_{f5} / \mu_{f6}$ , et en outre chacune des mesures de ces coefficients s'effectue dans de bonnes conditions du point de vue du fonctionnement du détecteur.

## Revendications

**1.** Procédé de mesure du grammage de chaque composant d'un matériau composé comportant au moins un premier composant (e) dont l'absorption d'énergie peut être représentée par une courbe comportant une discontinuité (D), pour une valeur d'énergie de discontinuité (E), et un second composant (f), de constitution chimique différente, dont l'absorption d'énergie peut être représentée par une courbe sans discontinuité pour les valeurs d'énergie utilisées dans la mesure, caractérisé en ce qu'il consiste :

- à émettre, en direction du matériau composé, deux faisceaux d'énergies différentes (E5 et E6), ou un seul faisceau comportant ces deux énergies, l'énergie E5 étant inférieure à la valeur d'énergie de discontinuité (E), et E6 étant supérieure à cette énergie de discontinuité E, ces énergies E5 et E6 étant choisies de manière à respecter les deux conditions suivantes :

- donner à l'énergie E5 une valeur suffisamment élevée pour que les photons de cette énergie traversent le matériau composé à mesurer dans une proportion suffisamment élevée ;
- donner à l'énergie E6 une valeur à la fois : suffisamment proche de E5 pour que ces deux énergies rentrent dans le spectre d'un détecteur à large bande, et suffisamment éloignée de E5 pour que E6 - E5 soit du méme ordre de grandeur que ΔE, ou légèrement supérieur, DE étant défini graphiquement sur la courbe d'absorption présentant la discontinuité, comme l'écart entre d'une part l'énergie correspondant à la valeur maximale $\mu_{Ecrète}$ du coefficient d'absorption à la discontinuité, et d'autre part l'énergie, inférieure à cette énergie de discontinuité, où on retrouve une valeur du coefficient d'atténuation égale à $\mu_{Ecrète}$,

- à mesurer, pour chaque faisceau d'énergie émis, une atténuation globale du matériau composé (N5/No5 ; N6/No6) ; et
- à déterminer le grammage de chacun des composants du matériau (Xe, Xf) à partir d'un système d'équations reliant, pour chaque valeur d'énergie, l'atténuation globale mesurée, l'absorption et le grammage de chacun des composants.

**2.** Procédé selon la revendication 1, caractérisé en ce que les coefficients d'atténuation globale sont mesurés au moyen d'un détecteur à faible résolution.

**3.** Procédé selon la revendication 1, caractérisé en ce que les énergies E5 et E6 sont choisies de manière à rendre le plus élevé possible le rapport entre, d'une part, le rapport des atténuations des second et premier matériaux (f) et (e) à l'énergie E5, et d'autre part le rapport des atténuations de ces matériaux (f) et (e) à l'énergie E6.

**4.** Procédé selon l'une quelconque des revendications 1 à 3, caractérisé en ce que le matériau composé est animé d'un mouvement continu et passe à travers le ou les faisceaux d'énergies (E5) et (E6).

**5.** Procédé selon l'une quelconque des revendications 1 à 4, caractérisé en ce que les faisceaux d'énergies sont émis simultanément par deux sources radioactives émettant à des énergies suffisamment différentes.

**6.** Procédé selon l'une quelconque des revendications 1 à 4, caractérisé en ce que les faisceaux d'énergies sont émis simultanément par une même source radioactive.

7.  Procédé selon l'une quelconque des revendications 1 à 4, caractérisé en ce que les faisceaux d'énergies sont émis par un même générateur de rayons X.

**Patentansprüche**

1.  Verfahren zur Ermittlung der Flächenmasse jeder Komponente eines zusammengesetzten Materials, das wenigstens eine erste Komponente (e) umfasst, deren Energieabsorption durch eine Kurve dargestellt werden kann, die einen Sprung (D) mit einem Sprungenergiewert (E) aufweist, und eine zweite Komponente (f) von anderer chemischer Beschaffenheit, deren Energieabsorption für die bei der Messung benutzten Energiewerte durch eine sprunglose Kurve dargestellt werden kann, **dadurch gekennzeichnet,** dass es darin besteht:

    -   in Richtung des zusammengesetzten Materials zwei unterschiedliche Energiestrahlenbündel (E5 und E6) oder ein einziges, beide Energien umfassendes Strahlenbündel auszusenden, wobei die Energie E5 kleiner als der Wert der Sprungenergie (E) und E6 größer als diese Sprungenergie E ist und diese Energien E5 und E6 so gewählt werden, dass die folgenden beiden Bedingungen eingehalten werden:

        -   der Energie E5 einen ausreichend großen Wert zu geben, damit die Photonen dieser Energie das zu messende zusammengesetzte Material mit einer ausreichend hohen Proportion durchqueren,
        -   der Energie E6 einen Wert zu geben, der gleichermaßen ausreichend nahe bei E5 liegt, so dass diese beiden Energien in das Spektrum eines Breitbanddetektors passen, und ausreichend weit von E5 entfernt ist, so dass E6 - E5 dieselbe Größenordnung wie $\Delta E$ hat oder etwas größer ist, wobei $\Delta E$ graphisch in der Absorptionskurve definiert wird, die den Sprung als Abstand zwischen einerseits der Energie darstellt, die dem Höchstwert $\mu_{Emax}$ des Absorptionskoeffizienten beim Sprung entspricht, und andererseits der Energie, die kleiner ist als diese Sprungenergie, wo man wieder einen Wert des Dämpfungskoeffizienten von gleich $\mu_{Emax}$ findet;

    -   für jedes emittierte Energiestrahlenbündel eine globale Dämpfung des zusammengesetzten Materials (N5/No5; N6/No6) zu messen; und
    -   die Flächenmasse jeder Komponente des Materials (Xe, Xf) aufgrund eines Systems von Gleichungen zu ermitteln, das für jeden Energiewert die global gemessene Dämpfung, die Absorption und die Flächenmasse jeder Komponente verknüpft.

2.  Verfahren nach Anspruch 1, dadurch gekennzeichnet, dass die Koeffizienten der globalen Dämpfung mittels eines Detektors mit schwacher Auflösung gemessen werden.

3.  Verfahren nach Anspruch 1, dadurch gekennzeichnet, dass die Energien E5 und E6 so gewählt werden, dass sie das Verhältnis zwischen einerseits dem Verhältnis der Dämpfungen des zweiten und ersten Materials (f) und (e) bei der Energie E5 und andererseits das Verhältnis der Dämpfungen dieser Materialien (f) und (e) bei der Energie E6 so groß wie möglich machen.

4.  Verfahren nach einem der Ansprüche 1 bis 3, dadurch gekennzeichnet, dass das zusammengesetzte Material in eine kontinuierliche Bewegung versetzt wird und den oder die Energiestrahlenbündel (E5) und (E6) durchqueren.

5.  Verfahren nach einem der Ansprüche 1 bis 4, dadurch gekennzeichnet, dass die Energiestrahlenbündel simultan durch zwei radioaktive Quellen emittiert werden, die ausreichend unterschiedliche Energien abstrahlen.

6.  Verfahren nach einem der Ansprüche 1 bis 4, dadurch gekennzeichnet, dass die Energiestrahlenbündel simultan von derselben radioaktiven Quellen emittiert werden.

7.  Verfahren nach einem der Ansprüche 1 bis 4, dadurch gekennzeichnet, dass die Energiestrahlenbündel von demselben Röntgenstrahlengenerator emittiert werden.

**Claims**

1.  Process for measuring the grammage of each component of a compound material comprising at least one first component (e), whose energy absorption can be represented by a curve having a discontinuity (D), for a discontinuity energy value (E), and a second component (f) having a different chemical constitution, whose energy absorption can be represented by a curve without a discontinuity for the energy values used in the measurement, characterized in that it comprises:

    -   emitting two beams with different energies (E5 and E6) or a single beam comprising these two energies in the direction of the compound material, the energy (E5) being lower than the discontinuity energy value (E) and E6 exceeds said discontinuity energy E, said energies E5 and E6 being chosen so as to respect the two following conditions:

- giving the energy E5 a sufficiently high value to ensure that the photons of this energy traverse the compound material to be measured in a sufficiently high proportion,
- giving the energy E6 a value which is both sufficiently close to E5 to ensure that these two energies enter the spectrum of a wide band detector and sufficiently remote from E5 to ensure that E6-E5 is of the same order of magnitude as $\Delta E$ or slightly exceeding the same, $\Delta E$ being graphically defined on the absorption curve having the discontinuity as the variation between on the one hand the energy corresponding to the maximum value $\mu_{Epeak}$ of the absorption coefficient at the discontinuity and on the other the energy, lower than said discontinuity energy, where there is an attenuation coefficient value equal to $\mu_{Epeak}$,

- measuring for each energy beam emitted, a global attenuation of the compound material (N5/No5; N6/No6) and
- determining the grammage of each of the components of the material (Xe, xf) on the basis of a system of equations linking, for each energy value, the measured global attenuation, the absorption and the grammage of each of the components.

2. Process according to claim 1, characterized in that the global attenuation coefficients are measured using a low resolution detector.

3. Process according to claim 1, characterized in that the energies E5 and E6 are chosen so as to make as high as possible the ratio between on the one hand the ratio of the attenuations of the second and first materials (f) and (e) at the energy E5 and on the other the attenuation ratio of these materials (f) and (e) at energy E6.

4. Process according to any one of the claims 1 to 3, characterized in that the compound material is moved continuously and passes through the beam (s) with energy (E5) and (E6).

5. Process according to any one of the claims 1 to 4, characterized in that the energy beams are emitted simultaneously by two radioactive sources emitting at sufficiently different energies.

6. Process according to any one of the claims 1 to 4, characterized in that the energy beams are emitted simultaneously by the same radioactive source.

7. Process according to any one of the claims 1 to 4, characterized in that the energy beams are emitted by the same X-ray generator.

ABSORPTION

FIG. 1

Ca

Cb

ENERGIE

E1          E2

ABSORPTION

D

FIG. 2

Cc

Cd

ENERGIE

E3  E4

E

ABSORPTION

$\mu_{Ecrète}$

$\Delta E$

FIG. 3

Ce

Cf

ENERGIE

E5  E

E6